# FASCICULE DE BREVET EUROPEEN

(11) **EP 4 201 712 B1**
(45) Date de publication et mention de la délivrance du brevet: **20.03.2024**
(21) Numéro de dépôt: 22199065.8
(22) Date de dépôt: 30.09.2022
(51) Int. Cl.: B60C 19/00, H01Q 1/22, G06K 19/077, B60C 5/14, B60C 15/06

(54) **PNEUMATIQUE ÉQUIPÉE D'UN DISPOSITIF D'ÉMISSION-RÉCEPTION RADIOFRÉQUENCE**
REIFEN MIT HOCHFREQUENZ-SENDE-EMPFANGSVORRICHTUNG
TYRE EQUIPPED WITH A RADIOFREQUENCY TRANSMISSION-RECEPTION DEVICE

(30) Priorité: 23.12.2021 FR 2114435
(43) Date de publication de la demande: 28.06.2023
(73) Titulaire: PRIMO1D, 38000 Grenoble (FR)
(72) Inventeur: SETTE, Daniele, 38000 GRENOBLE (FR)
(74) Mandataire: IP Trust

(56) Documents cités:
- WO-A1-2021/111075
- DE-A1-102020 201 176
- US-A1- 2005 132 790
- US-A1- 2020 349 410

## Description

### DOMAINE DE L'INVENTION

La présente invention concerne une enveloppe pneumatique équipée d'un dispositif d'émission réception radiofréquence, tel qu'une étiquette RFID (« RFID tag » selon la terminologie anglo-saxonne). Plus particulièrement, la présente invention concerne un dispositif d'émission réception radiofréquence présentant un facteur de forme filaire, apte à résister à de fortes sollicitations thermo mécaniques qu'il est susceptible de subir lorsqu'il est intégré à une enveloppe pneumatique équipant un véhicule.

### ARRIERE PLAN TECHNOLOGIQUE DE L'INVENTION

On connaît des documents US8471773, WO2016038342, WO2011161336, GB2472025, GB2472026, JP2013189718 ou WO2008080245, un dispositif incorporant un circuit intégré à un fil de nature textile, permettant ainsi de conférer à ce dispositif un facteur de forme filaire. Dans le document US2019391560, deux fils d'antenne formés de conducteurs électriques sont respectivement soudés aux plots d'une puce d'émission réception radiofréquence (RF) conformément à la mise en œuvre de la technologie « E-Thread^{™}» .

Cette soudure peut être réalisée dans des rainures aménagées sur des faces latérales et opposées de la puce. Conventionnellement, le fil d'antenne est constitué d'un brin de matériau électriquement conducteur (ou d'une pluralité d'un tel brin), et il présente une section sensiblement circulaire dont le diamètre est typiquement compris entre 50 et 200 microns, ce qui permet de l'insérer dans une rainure formée sur un flanc de la puce, la hauteur de cette puce étant typiquement comprise entre 300 et 500 microns.

Quelle que soit la manière selon laquelle la connexion électrique entre les plots de la puce d'émission réception et le fil d'antenne est réalisée, cette connexion reste relativement fragile. C'est notamment le cas vis-à-vis des efforts de traction, de torsion, ou de cisaillement qui peuvent s'appliquer sur les fils d'antenne lorsque le dispositif d'émission réception est intégré dans un objet, ou au cours de son intégration dans cet objet.

Pour rendre le dispositif d'émission réception radiofréquence plus robuste vis-à-vis de certains au moins de ces efforts, et sans perdre son caractère souple et son facteur de forme filaire, certains documents de l'état de la technique, tel que le document WO2019175509, prévoient de guiper une chaîne de dispositifs autour d'un fil d'âme textile.

Cette opération de guipage est particulièrement délicate à mettre en oeuvre, car elle nécessite de manipuler des chaînes de dispositifs d'émission réception RF. Les efforts appliqués à cette chaîne lors d'une telle opération, notamment au niveau des connexions électriques entre la puce et les fils d'antenne, peuvent conduire à leur désolidarisation, ce qui rend le dispositif non fonctionnel après qu'il ait été singularisé.

Les documents WO2021111075 et WO2021111076 proposent d'intégrer, malgré leur fragilité, de tels dispositifs d'émission réception dans une enveloppe pneumatique, ce qui peut être problématique pour des raisons de fiabilité.

Le document DE102020201176 propose également d'intégrer un dispositif d'émission-réception dans une enveloppe pneumatique. L'antenne du dispositif RFID est formée d'un fil multifilament torsadé qui comprend au moins un filament électriquement conducteur et au moins un monofilament ou multifilament textile. Dans le document US2005132790, un transpondeur est associé à une antenne annulaire comprenant un fil conducteur enroulé en spires autour d'un fil textile, et placé contre une couche étanche interne de l'enveloppe pneumatique.

### OBJET DE L'INVENTION

L'objet de la présente invention vise à résoudre au moins en partie ce problème. Plus particulièrement, un but de l'invention est de proposer une enveloppe pneumatique destinée à équiper un véhicule et intégrant un dispositif d'émission-réception radiofréquence apte à résister aux de fortes sollicitations thermomécaniques qu'il est susceptible de subir.

### BREVE DESCRIPTION DE L'INVENTION

En vue de la réalisation de ce but, l'objet de l'invention propose Enveloppe pneumatique de forme toroïdale et présentant un axe de rotation, et comportant :
- Un bloc sommet et deux blocs latéraux, le bloc sommet présentant deux extrémités axiales, un bloc latéral réunissant respectivement une extrémité axiale à un bourrelet par l'intermédiaire d'un flanc ;
- Une armature de carcasse ancrée dans chacun des bourrelets par retournement autour d'une tringle annulaire, l'armature de carcasse séparant l'enveloppe pneumatique en une zone intérieure disposée du côté de la cavité fluide de l'enveloppe pneumatique et une zone extérieure disposée du côté de l'extérieur de l'enveloppe pneumatique ;

- Une couche de bourrelet formant la surface extérieure de l'enveloppe pneumatique du bourrelet, ladite couche de mélange élastomère de bourrelet étant destinée à venir en contact avec la jante,
- Une couche de flanc située radialement extérieurement au contact de la couche de mélange élastomère de bourrelet et formant la surface extérieure dudit flanc ;
- une couche étanche interne située le plus intérieurement à l'enveloppe pneumatique.
Selon l'invention au moins un des blocs latéraux de l'enveloppe pneumatique comprend un dispositif d'émission-réception radiofréquence comportant :
- une puce comprenant un circuit d'émission-réception et au moins deux plots de connexion électriquement reliés au circuit d'émission-réception ;
- une antenne dipôle constituée de deux fils d'antenne respectivement électriquement reliés aux deux plots de connexion de la puce, l'antenne dipôle comprenant un fil textile et au moins un ruban formé d'un matériau électriquement conducteur, le ruban étant enroulé en spires autour du fil textile pour le recouvrir au moins en partie.

Selon d'autres caractéristiques avantageuses et non limitatives de l'invention, prises seules ou selon toute combinaison techniquement réalisable :
- l'antenne dipôle est orientée dans le bloc latéral au moins en partie selon une direction circonférentielle ;
- le dispositif d'émission-réception radiofréquence est intégré dans la zone extérieure de l'enveloppe pneumatique;
- le dispositif d'émission-réception radiofréquence est intégré dans la couche de flanc;
- le dispositif d'émission-réception radiofréquence est situé au niveau de l'équateur du flanc de l'enveloppe pneumatique;
- le dispositif d'émission-réception radiofréquence est intégré dans la zone intérieure de l'enveloppe pneumatique;
- l'enveloppe pneumatique comprend une couche de renforts intercalée entre la couche de carcasse et la couche étanche interne et dans laquelle le dispositif d'émission-réception radiofréquence est disposé à l'interface entre la couche étanche interne et la couche de renforts ;
- l'enveloppe pneumatique comprend un insert de flanc disposé axialement intérieurement relativement à l'armature de carcasse et dans laquelle le dispositif d'émission-réception radiofréquence est intégré dans l'insert de flanc ;
- le dispositif d'émission-réception radiofréquence est intégré dans la couche de bourrelet ;
- les deux fils d'antenne sont respectivement logés dans deux rainures longitudinales aménagées sur des faces opposées de la puce ;
- l'antenne dipôle comprend une boucle d'adaptation d'impédance ;
- la boucle présente une longueur comprise entre 10mm à 30mm ;
- le fil textile est composé à partir de fibres aramides ou d'un polyester aromatique ;
- le ruban est constitué d'un fil métallique laminé ;
- le ruban présente une épaisseur inférieure ou égale à 30 fois un diamètre du fil textile, avantageusement inférieure ou égale à 10 fois ce diamètre ;
- l'antenne dipôle présente une longueur comprise entre 40 et 80mm.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]

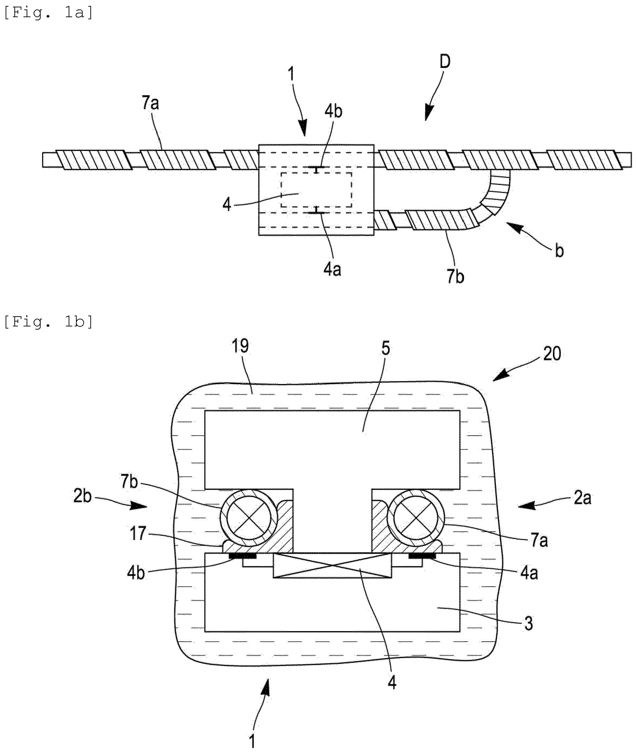

   Les figures 1a, 1b représentent respectivement une vue d'ensemble et une coupe d'un dispositif d'émission-réception radiofréquence conforme à un mode de mise en oeuvre ;
[Fig. 1c]

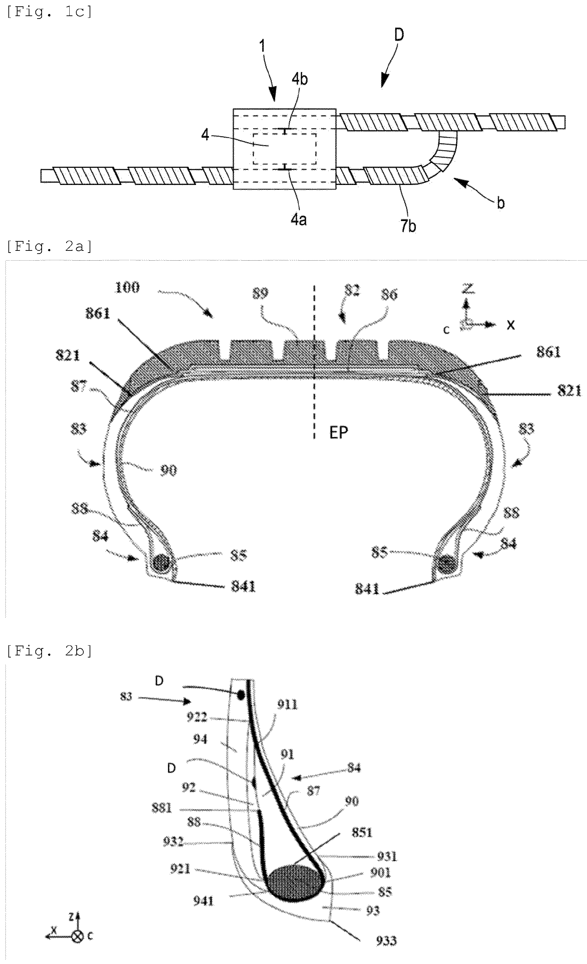

   La figure 1c représente une variante du dispositif représenté sur la figure 1a ;
[Fig. 2a]
   La figure 2a représente une coupe méridienne d'une enveloppe pneumatique d'un premier type et conforme à l'invention ;
[Fig. 2b]
[Fig. 2c]
[Fig. 2d]

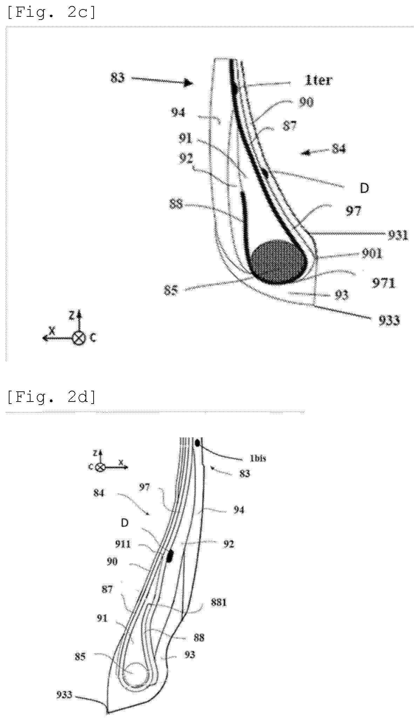

   Les figures 2b, 2c, 2d représentent des vues de détail d'un des blocs latéraux de l'enveloppe pneumatique de la figure 2a selon différents modes de réalisation ;
[Fig. 3]

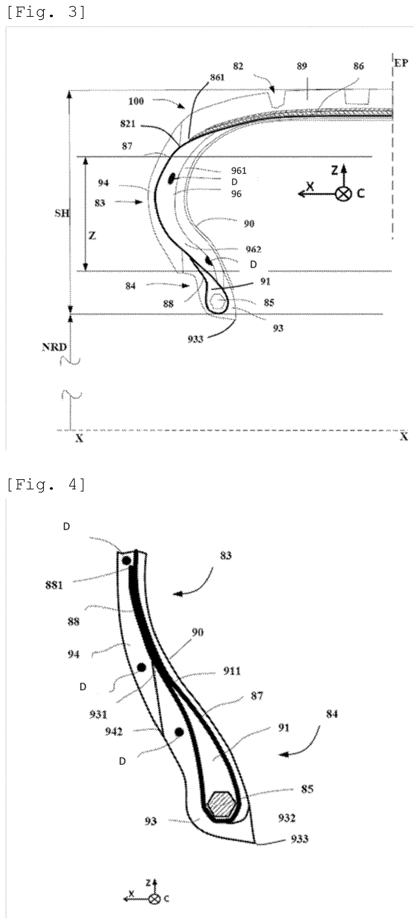

   La figure 3 représente une coupe méridienne d'une enveloppe pneumatique d'un deuxième type, apte à un roulage à plat, et conforme à l'invention ;
[Fig. 4]
   La figure 4 représente un bloc latéral, d'une enveloppe pneumatique 100 d'un autre type, pour principalement des véhicules de tourisme, et conforme à l'invention.

### DESCRIPTION DETAILLEE DE L'INVENTION

### Dispositif d'émission-réception radiofréquence

Les figures 1a, 1b représentent respectivement une vue d'ensemble et une coupe d'un dispositif d'émission-réception radiofréquence D conforme à un mode de mise en oeuvre.

Le dispositif D comprend un circuit électronique intégré sous la forme d'une puce de semi-conducteurs 1 (plus simplement désigné « puce » dans la suite de sa description). Dans le mode de mise en oeuvre pris en illustration, et comme cela est visible sur la figure 1b, la puce 1 est formée d'un substrat 3 comportant un circuit fonctionnel d'émission-réception 4. La puce comprend également un capot 5, présentant ici une section transversale en T, le pied du T étant assemblé avec une face principale du substrat 3. On constitue de la sorte sur deux faces latérales opposées de la puce 1, entre la barre du T du capot 5 et la surface principale du substrat 3, deux rainures longitudinales 2a, 2b. Ces rainures sont destinées à loger respectivement des portions longitudinales de deux fils d'antenne 7a, 7b, les deux fils constituant une antenne dipôle du circuit d'émission-réception 4. Les rainures 2a, 2b s'étendent d'un côté à l'autre de la puce 1, et présentent une hauteur et une profondeur typiquement comprises chacune entre 50 et 200 microns, de sorte que des portions des fils d'antenne 7a, 7b puissent être logées entièrement dans les rainures et, avantageusement, sans forcer leur encastrement.

La puce 1 comprend également au moins deux plots de connexion 4a, 4b disposés, dans l'exemple représenté sur la figure 1b, sur la face principale du substrat 3 et débouchant respectivement dans l'une et l'autre des rainures 2a, 2b. Ces plots 4a, 4b sont électriquement reliés au circuit d'émission réception 4 de la puce 1 à l'aide de pistes et/ou de vias conducteurs disposés sur et dans le substrat 3. On peut de la sorte placer les fils d'antenne 7a, 7b, en contact électrique avec les plots de connexion 4a, 4b, lorsque ces fils sont logés dans les rainures 2a, 2b, et les faire coopérer avec le circuit d'émission-réception 4. La liaison électrique des fils d'antenne 7a, 7b avec les plots de connexion 4a, 4b est avantageusement réalisée par l'intermédiaire d'un matériau de liaison, qui peut être un matériau de soudure 17 ou une colle conductrice. Le matériau de liaison assure également la tenue mécanique des fils d'antenne 7a, 7b à la puce 1. On peut également envisager de relier électriquement les fils d'antenne 7a, 7b aux plots de connexion 4a, 4b par « wire bonding » (ou « liaison par fil » en français), cette liaison mettant en oeuvre un fil conducteur, par exemple en or, qui est rendu solidaire des deux éléments pour les interconnecter, typiquement par application d'ultrason.

Lorsque cette liaison est réalisée par soudure, l'étape de soudure expose le matériau de soudure à une température typiquement comprise entre 80° et 300°C ce qui permet, lors de la réalisation de cette soudure, de ne pas exposer la puce 1, le circuit 4 et les fils d'antenne 7a, 7b à une température excessive susceptible de les endommager. Le matériau de soudure 17 peut consister en tout matériau conducteur qui convient, par exemple un métal ou un alliage de métaux, par exemple un alliage d'étain, d'argent et de cuivre. La fusion du matériau de soudure peut être réalisée par tous moyens : application d'un rayonnement électromagnétique, par ultra-son, par un flux d'air chaud, etc. En alternative à une soudure, on peut employer, comme matériau de liaison, une colle conductrice dont la polymérisation est réalisée en température et/ou par application d'un rayonnement UV. Dans une autre variante encore, les fils d'antenne 7a, 7b sont encastrés dans les rainures de sorte à forcer le contact entre ces fils et les plots de connexion 4a, 4b. Dans ce cas, le matériau de liaison 17 n'est pas nécessaire, et la liaison est effectuée à température ambiante et sans apport d'énergie thermique.

Dans tous les cas, on évitera d'exposer la puce 1, le circuit 4 et les fils d'antenne à une température de liaison (température de soudure ou de polymérisation du matériau de liaison) excessive, par exemple excédant 300°C comme cela a été précisé dans le paragraphe précédent. Cette température de liaison est typiquement comprise entre 80°C et 300°C.

On note que le dispositif D peut, dans son usage, être exposé à des températures relativement importantes (par exemple au cours d'un étape de vulcanisation, lorsque ce dispositif est intégré à une pièce en caoutchouc, ou au cours de son intégration dans un dispositif final, par exemple par extrusion), qui peuvent s'élever par exemple jusque 300°C, si bien que la résistance en température du dispositif et des éléments qui le constituent doivent être aptes à respecter ces contraintes.

Pour des raisons de protection mécanique et chimique, la puce 1 est préférentiellement encapsulée et enrobée d'un matériau de protection 19, tel qu'une résine rigide et étanche.

De nombreuses variantes et additions peuvent être apportées à l'exemple du dispositif D représenté sur les figures 1a, 1b. Ainsi le circuit d'émission réception 4 n'est pas nécessairement incorporé dans le substrat 3, il peut être en partie au moins incorporé dans le capot 5. On munira ce capot 5, si cela apparaît nécessaire ou utile, de plots de connexion, de pistes et de vias similairement à ceux formés sur le substrat 3 de la puce 1 illustrée sur les figures. Le circuit 4 peut présenter d'autres fonctionnalités que celle d'émission-réception et la puce 1 (le substrat 3 et/ou le capot 5 dans l'exemple représenté) ou incorporer d'autres circuits que le circuit d'émission-réception 4. Il peut notamment s'agir de capteurs (de température, de pression...), de circuits de calcul, de mémoire, de sources d'énergie (batterie, cellules solaires...), de circuits optiquement actifs comme une diode électroluminescente. Pour les applications d'étiquetage présentées en introduction de cette demande, le circuit d'émission réception 4 forme avantageusement un circuit d'identification RFID.

On retrouve sur la vue d'ensemble du dispositif d'émission-réception radiofréquence D de la figure 1a, la puce 1 comportant le circuit d'émission-réception 4 électriquement relié aux deux plots 4a, 4b, les deux fils d'antenne 7a, 7b présentant une portion de leur longueur logée dans les rainures de la puce 1, ces deux fils étant respectivement électriquement reliés aux deux plots.

Les deux fils d'antenne constituent une antenne dipôle du dispositif D, la puce 1 étant disposée entre ces deux fils. Par « antenne dipôle », on désigne toute antenne apte à se coupler à un dispositif lecteur par la composante électrique du champ électromagnétique qui se propage entre ces deux éléments, et non par l'intermédiaire d'un champ magnétique inductif seul. La transmission et/ou la réception d'un rayonnement électromagnétique de transmission est réalisée en appliquant ou en percevant un signal électrique, à l'aide du circuit d'émission-réception 4, entre et/ou sur les deux fils 7a, 7b.

Dans la configuration avantageuse représentée sur la figure 1a, le premier fil d'antenne 7a s'étend de part et d'autre de la puce 1. Dit autrement, une portion centrale du premier fil d'antenne 7a est logée dans la rainure 2a de la puce 1. Cette portion centrale est électriquement reliée au plot de connexion 4a du circuit 4, à l'aide du matériau de liaison 17 dans l'exemple représenté. Le deuxième fil d'antenne 7b est quant à lui électriquement relié à l'autre plot de connexion 4b au niveau d'une première extrémité. Le deuxième fil 7b ne s'étend donc que d'un côté de la puce 1. La seconde extrémité, opposée à celle logée dans la rainure 2b, est en contact électrique avec le premier fils d'antenne 7a, de sorte à réaliser une boucle b d'adaptation d'impédance.

Dans une autre configuration avantageuse représentée sur la figure 1c, qui est fonctionnellement identique à celle de la figure 1a, la boucle b d'adaptation d'impédance est réalisée en connectant une extrémité du second fil d'antenne 7b, qui s'étend de part et d'autre de la puce 1, au premier fil d'antenne 7a qui ne s'étend que d'un côté de la puce 1.

D'une manière plus générale, les deux fils d'antenne 7a, 7b sont en contact électrique l'un avec l'autre pour configurer la boucle b permettant d'adapter l'impédance de l'antenne à celle du circuit d'émission-réception 4. La longueur de la boucle est choisie pour faire correspondre au mieux l'impédance de l'antenne à celle du circuit d'émission-réception 4 de la puce 1.

Dans le cadre de l'intégration du dispositif D dans une enveloppe pneumatique qui fait l'objet de la présente invention, l'antenne présente avantageusement une longueur comprise entre 40 et 80mm, lorsque ce dispositif est appelé à fonctionner à une fréquence de 900MHz. Pour éviter tout doute, on définit la longueur de l'antenne dipôle comme la distance séparant les deux extrémités du premier fil d'antenne 7a dans le cas de la configuration de la figure 1a ou la distance séparant les extrémités opposées du premier et du deuxième fil d'antenne 7a, 7b dans le cas de la configuration de la figure 1c.

La boucle présente une longueur (c'est-à-dire la partie du premier fil 7a disposée entre la puce 1 et le point jonction avec le deuxième fil 7b) comprise entre 10mm à 30mm.

Pour éviter que les deux fils d'antenne 7a, 7b ne se contactent électriquement en dehors du point de contact choisi pour former cette boucle b, on peut prévoir d'enrober les portions émergeantes de ces deux fils (ou au moins l'un d'entre eux) d'un matériau électriquement isolant, de préférence souple, tel qu'une résine.

On pourra se référer au document US2019391560 pour obtenir un procédé possible de fabrication d'un tel dispositif d'émission-réception D. Selon ce document, la puce 1 est assemblée aux fils d'antenne, les deux fils étant maintenus en tension et sensiblement parallèles l'un à l'autre lors de cette étape d'assemblage.

On peut de la sorte fabriquer en grande série une chaîne composée d'une pluralité de dispositifs d'émission-réception D, cette chaîne pouvant être mise en bobine pour faciliter sa manutention.

Selon un aspect important, et dans le but de rendre le dispositif D robuste vis-à-vis des sollicitations mécaniques qu'il pourrait être amené à subir, les fils d'antenne 7a, 7b sont constitués l'un et l'autre d'un fil textile sur lequel est enroulé, en spires, un ruban en matériaux électriquement conducteur. Par « ruban » on désigne un film allongé, souple et plat. Ce ruban peut, par exemple, être constitué d'un fil métallique laminé. Ce ruban est enroulé contre le fil textile, légèrement serré contre ce fil. Il n'est pas nécessaire de prévoir de matière adhésive entre le fil textile et le ruban.

Avantageusement, le fil textile est choisi pour présenter un caractère extensible c'est-à-dire que dans ce cas le fil présente un pouvoir d'élongation élastique qui peut être supérieur ou égale à 5%, 20%, 50%, voire même à 100% de sa longueur au repos. Mais cette caractéristique n'est pas essentielle, et l'invention est parfaitement compatible avec un fil textile non extensible, par exemple présentant une élongation élastique inférieure à 5%.

Le matériau constituant le fil textile est choisi pour résister aux traitements thermiques de fabrication et d'usage du dispositif D qui ont été évoqués antérieurement. Plus spécifiquement, le matériau constituant le fil textile est choisi de sorte que, lorsque le fil est placé en tension sous une charge de 2N, l'échauffement local du fil à la température de liaison des fils d'antenne 7a, 7b à la puce 1 ne provoque pas sa rupture. Comme on l'a vu, cet échauffement peut atteindre 300°C. Cela assure la compatibilité du fil textile avec l'étape d'assemblage. Avantageusement, cet échauffement local provoque une élongation du fil qui ne dépasse pas 20%. Plus spécifiquement encore, le ou les matériau(x) constituant le fil textile présente une température de transition vitreuse supérieure à 150°C.

A titre d'exemple, le fil textile peut être composé à partir de fibres aramides, et ainsi former un fil multifilament para-aramides (par exemple connu sous la dénomination commerciale Technora^{™}), méta-aramides (par exemple connu sous la dénomination commerciale Nomex^{™}), un fil en fibres courtes ou longues méta-aramides, tel qu'un polyamide-imide (par exemple connu sous la dénomination commerciale Kermel^{™}). Il peut alternativement s'agir d'un fil PBO (poly(p-phénylène-2,6-benzobisoxazole), connu sous la dénomination commerciale Zylon^{™}. Il peut également être formé à partir d'un polyester aromatique (par exemple connu sous la dénomination commerciale Vectran^{™}). Il peut également s'agir d'un fil formé d'un polymère tel que du PEAK (polyaryléthercétones), de fibres naturelles, de fibres de verres, de fibres de carbone, de fibres PPS (Polyphénylène Sulphide) ou de fibres d'acier. On peut prévoir que, en plus de ces fibres ou en remplacement, le fil textile comprenne un brin conducteur (ou une pluralité de brins conducteurs) de diamètre inférieur à 20 microns. Le fil textile est avantageusement un isolant électrique ou faiblement conducteur électriquement, sans toutefois écarter la possibilité que ce fil textile soit conducteur.

Le fil présente avantageusement une section transversale circulaire et son diamètre est compris entre 10 microns et 500 microns, et avantageusement entre 80 microns et 200 microns.

Le ruban en matériau électriquement conducteur peut être, quant à lui, constitué d'un métal ou d'une pluralité de métaux. Comme on l'a vu, il peut s'agir d'un fil métallique laminé. Dans ce cas, et avantageusement, ce laminage est réalisé à froid. Préférentiellement, il n'est pas suivi de recuit thermique. Ce procédé augmente l'écrouissage du matériau constituant la bande, et donc sa résistance à la fatigue.

Le ruban peut être constitué ou comprendre du cuivre, du laiton, du bronze, cupro-nickel, un alliage de cuivre comportant plus de 96% en masse de cuivre, du nickel.

On peut prévoir que ce ruban soit constitué d'une couche principale en un premier matériau, cette couche principale étant recouverte sur au moins une de ses faces d'un revêtement conducteur. Ainsi, la couche principale peut être en acier revêtue d'un revêtement réalisé dans un matériau choisi dans le groupe constitué des matériaux suivants : argent, or, cuivre, étain, nickel, laiton, zinc et alliages d'étain. Alternativement, la couche principale peut être réalisée dans un matériau choisi dans le groupe constitué des matériaux suivants : acier inoxydable, un alliage de nickel dans lequel le nickel représente à lui seul au moins 45% de la masse de l'alliage, d'un alliage de titane dans lequel le titane représente à lui seul au moins 70% de la masse de l'alliage, nickel.

Avantageusement, le revêtement présente une résistivité électrique inférieure à celle du matériau formant la couche principale. Il peut être choisi pour ses propriétés anticorrosion, par exemple être constitué d'argent. Le revêtement peut être formé par dépôt sur la couche principale, avant ou après une étape de laminage, comme cela a été présenté dans un paragraphe précédent. Ce ruban peut être enroulé sur le fil textile pour constituer un fil d'antenne 7a, 7b, de sorte à exposer le revêtement. On profite alors de la relative faible résistivité de ce revêtement pour favoriser, par effet de peau, la conduction électrique d'un signal engendré dans le fil d'antenne par un rayonnement électromagnétique.

Quelle que soit la nature choisie du ruban, celui-ci présente une épaisseur faible, inférieure à 50 microns, et typiquement compris entre 5 microns et 20 microns, et avantageusement entre 5 microns et 10 microns, de manière à pouvoir être suffisamment flexible pour être enroulé en spires sur le fil textile. Il est apte à se déformer élastiquement ou plastiquement. Typiquement, le ruban présente une épaisseur 10 à 20 fois, voire 30 fois, inférieure au diamètre du fil textile. Le diamètre des fils d'antenne 7a, 7b est donc essentiellement déterminé par celle du fil textile. Ce diamètre est parfaitement compatible avec la hauteur et la profondeur des rainures 2a, 2b aménagées dans la puce 1 du dispositif D, dans lesquelles les fils d'antenne sont destinés à être logés.

Le ruban en matériau électriquement conducteur peut présenter une largeur comprise entre 40 microns et 200 microns, sans que toutefois cette caractéristique ne forme une limitation quelconque. Dans certains cas, cette largeur peut être choisie pour être plus étendue que la longueur de la puce, c'est-à-dire la dimension de la puce selon laquelle les rainures longitudinales 2a, 2b et/ou les fils d'antennes sont agencés (typiquement de l'ordre de 500 microns). De la sorte une spire peut entièrement occuper une rainure. On facilite alors l'assemblage des fils d'antenne 7a, 7b à la puce 1, et notamment lors de la liaison électrique des fils aux plots de connexion 4a, 4b lorsque les spires du ruban ne sont pas jointives.

L'enroulement du ruban en spires autour du film textile peut-être réalisé de multiples manières. Ainsi, et comme cela est représenté sur la figure 1a, les spires peuvent être non jointives, c'est-à-dire que deux spires successives sont espacées l'une de l'autre et ne se touchent pas. Alternativement, on peut prévoir d'enrouler le ruban en spires jointives ou en spires se recouvrant. Des spires jointives contribuent à améliorer la conductivité électrique du fil.

On peut par ailleurs prévoir une pluralité de rubans électriquement conducteurs, tous enroulés en spires sur le fil textile pour former un fil d'antenne 7a, 7b. On améliore de la sorte la robustesse mécanique et électrique du fil. On assure notamment la continuité électrique du fil d'antenne, même après la rupture de l'un des rubans. Dans un tel cas, les sens d'enroulement des rubans sur le fil textile peuvent être tous identiques ou être différents. Les rubans sont constitués de matériaux électriquement conducteurs qui peuvent être tous identiques ou différer entre eux.

Quels que soient le nombre, la nature, et le sens d'enroulement du ou des ruban (s) sur le fil textile, on dispose à la fin de cette étape préalable de préparation, d'un fil d'antenne permettant de constituer une antenne dipôle robuste, c'est-à-dire présentant une grande résistance mécanique, et flexible, c'est-à-dire apte à absorber des efforts de traction, de torsion et/ou de flexion sans se détériorer, même après lorsque ces efforts se répètent, en cycle, de nombreuses fois.

La relative faible épaisseur du ruban combinée à la nature textile du fil permet ainsi à l'antenne d'être souple, et donc de se déformer par pliage par exemple. Comme on l'a déjà noté, la fabrication du ruban peut le rendre particulièrement résistant à la fatigue. L'agencement en spires du ruban sur le fil textile permet notamment d'absorber des efforts de traction appliqués au fil d'antenne. La dimension (son diamètre) du fil d'antenne peut être identique à celle d'un fil conducteur conventionnel.

Ces propriétés ne pourraient être obtenues identiquement par une antenne réalisée à l'aide d'un fil conducteur conventionnel, présentant une section transversale circulaire et entièrement constitué d'un conducteur électrique, même si celui-ci était disposé en spires. C'est notamment le cas pour sa déformation en traction.

On note également que la configuration des fils d'antenne qui vient d'être présentée est parfaitement compatible avec le procédé de fabrication d'un dispositif d'émission-réception radiofréquence D tel que celui-ci est notamment décrit dans le document US2019391560. L'enroulement du ruban sur le fil textile peut être réalisé avant l'étape d'assemblage de la puce 1 aux deux fils d'antenne. À nouveau, un tel fil d'antenne présente un facteur de forme, et notamment un diamètre, tout à fait similaire à celui d'un fil conventionnel, présentant une section transversale circulaire et entièrement constitué d'un conducteur.

Un fil d'antenne comprenant l'enroulement en spires du ruban conducteur présente d'autres avantages, notamment de natures électriques. Elle présente une impédance présentant une composante inductive plus importante qu'un simple fil conducteur conventionnel. En conséquence, il est possible de réduire la dimension de la boucle b d'adaptation d'impédance de l'antenne dipôle. On rend le dispositif plus robuste et on réduit la quantité de résine de protection dont on enrobe parfois cette boucle b ou les fils composant cette boucle. On forme un dispositif d'émission-réception dont une partie rigide est de plus petite dimension que dans les solutions connues. De plus, la longueur du fil conducteur 7a peut-être réduite, sans affecter la capacité de transmission réception de l'antenne dipôle, ce qui permet de rendre le dispositif D plus compact. C'est en particulier le cas lorsque le dispositif D forme une étiquette RFID et que le circuit d'émission-réception 4 est appelé à fonctionner dans une gamme de fréquences normalisée, autour de 900 mégahertz.

Il est également possible de découper le ruban sans découper le fil textile, ce qui permet de briser la continuité électrique du fil, par exemple pour raccourcir la longueur effective de l'antenne, sans briser la continuité mécanique du fil d'antenne. Cette caractéristique peut notamment être exploitée lors de la fabrication d'une pluralité de dispositifs, chaînés entre eux par l'intermédiaire de deux fils textiles de grandes longueurs, les rubans enroulés en spires sur ces deux fils textiles de grande longueur étant découpés régulièrement pour définir des antennes respectivement associées à chaque puce. Cela permet de rendre les dispositifs fonctionnels, même lorsqu'ils se présentent sous une forme chaînée.

Le dispositif D n'est nullement limité à incorporer une puce 1 munie de rainures 2a, 2b, comme cela a été présenté à titre d'illustration en référence aux figures. Les rainures facilitent le positionnement des fils d'antenne 7a, 7b vis-à-vis de la puce 1 lors de leur assemblage. On peut prévoir que le capot 5 soit assemblé sur le substrat 3 uniquement temporairement, pour faciliter cette étape de liaison, mais qu'il soit retiré après celle-ci. Un tel procédé d'assemblage est notamment décrit dans le document US2020335475.

Quelle que soit la configuration choisie du dispositif d'émission-réception radiofréquence D, celui-ci est formé d'une puce 1 comprenant un circuit d'émission-réception 4 et deux plots de connexion 4a, 4b électriquement reliés au circuit d'émission-réception 4. Au moins un fil d'antenne est couplé à la puce, et ce fil d'antenne est constitué d'un fil textile et d'au moins un ruban enroulé en spires autour du fil textile.

Les avantages d'un tel dispositif vis-à-vis d'un dispositif conventionnel comprenant par exemple une antenne cylindrique formé d'un fil déformé en spiral, et notamment lorsqu'il est intégré dans une enveloppe pneumatique, sont un meilleur gain (meilleure performance RF), un encombrement spatial réduit (dispositif moins intrusif dans l'enveloppe pneumatique) et un procédé de mise en oeuvre plus simple.

### Préparation du dispositif d'émission-réception radiofréquence

On peut prévoir des étapes de préparation du dispositif d'émission-réception radiofréquence qui vient d'être décrit pour faciliter sa manutention et permettre son intégration dans une enveloppe pneumatique.

On peut notamment prévoir une étape de guipage, permettant d'encapsuler le dispositif dans une enveloppe textile, sans affecter son facteur de forme filaire. Au cours de cette étape de guipage, dont on trouvera un exemple de mise en oeuvre dans le document US8814054, on dispose un dispositif ou une chaîne de tels dispositifs colinéairement à une âme textile, et on enroule au moins un fil de couverture sur l'ensemble pour retenir le ou les dispositif(s) sur l'âme. On note qu'au cours de cette étape, le dispositif étant maintenu colinéraire à l'âme, il est peu sollicité mécaniquement. Avantageusement, on enroule deux fils de couverture selon des sens d'enroulement différents afin de compenser les contraintes de torsion qu'un fil de couverture peut induire.

On peut ainsi disposer une pluralité de dispositifs individuellement sur et le long d'une âme textile de grande dimension avant de procéder à l'enroulement du ou des fils de couvertures. On peut dans ce cas choisir la distance séparant deux dispositifs dans le fil guipé résultant de cette opération, ce qui facilite sa découpe pour individualiser les dispositifs encapsulés.

On peut renouveler l'étape de guipage une pluralité de fois : le fil guipé incorporant un ou des dispositifs D disposés sur un fil d'âme dit « primaire » obtenu au cours d'une première étape de guipage étant lui-même disposé sur un fil d'âme dit « secondaire » au cours d'une étape suivante de guipage au cours duquel on enroule autour ce fil guipé (ou des sections de ce fil) à l'aide d'un fils ou d'une pluralité de fils de couverture.

Le dispositif d'émission-réception ainsi préparé par guipage présente un facteur de forme et des dimensions rendant ce dispositif particulièrement compact et donc peu intrusif, notamment pour son intégration dans l'une des couches constituant une enveloppe pneumatique. Il peut ainsi présenter un diamètre compris entre 0,5 mm (au niveau des fils d'antenne) et 1mm (au niveau de la puce 1). Sa longueur, correspondant à la longueur de l'antenne dipôle, est typiquement comprise entre 40 mm et 80mm, comme cela a été exposé précédemment.

La préparation du dispositif d'émission-réception radiofréquence D peut également comprendre une étape d'enduction de ce dispositif d'un promoteur d'adhésion à la gomme élastomère composant certaines couches de l'enveloppe pneumatique, en vue de son intégration. Alternativement à cette étape d'enduction, on peut prévoir que le promoteur d'adhésion soit directement intégré à la gomme élastomère composant la couche dans laquelle ou contre laquelle le dispositif D est destiné à s'intégré.

Lorsque la préparation comprend une étape de guipage, l'étape d'enduction est préférentiellement réalisée postérieurement à l'étape de guipage. On choisit dans ce cas un promoteur d'adhésion adapté à la nature du ou des fils de couverture textile qui encapsulent le dispositif. Il peut ainsi s'agir d'un latex résorcine-formaldéhyde pour des fils de couverture textile, comme des fils de couverture en polyamide.

Lorsque la préparation ne comprend pas d'étape de guipage, le promoteur d'adhésion est choisi pour être adapté à la nature conductrice du ruban spiralé de l'antenne dipôle, ce ruban formant dans ce cas la surface extérieure principale du dispositif D. Ou, comme cela a été précisé plus avant, que le promoteur d'adhésion soit intégré au mélange élastomère. Il peut s'agir d'une résine résorcinolique.

Cette étape d'enduction peut être réalisée sur un dispositif D individualisé ou sur une chaîne de tels dispositifs, avant leur singularisation.

Un dispositif d'émission-réception radiofréquence D singularisé et enduit du promoteur d'adhésion peut être intégré directement à l'intérieure d'une couche de mélange élastomère d'une enveloppe pneumatique ou disposé à l'interface de deux couches de mélange élastomère de cette enveloppe, comme cela sera détaillé dans une section ultérieure de cette description.

Alternativement, le dispositif d'émission-réception radiofréquence D (enduit ou non du promoteur d'adhésion) peut être incorporé dans une enveloppe primaire de mélange élastomère, cette enveloppe primaire étant ensuite intégré à l'enveloppe pneumatique. Cette incorporation dans l'enveloppe primaire peut être mise en oeuvre par tout moyen qui convient : par moulage, par extrusion (notamment lorsqu'une chaîne de dispositif D est traitée), par calandrage.

Le dispositif d'émission-réception radiofréquence qui résulte de cette préparation peut être intégré dans une enveloppe pneumatique selon l'un des modes de réalisation qui font l'objet de la suite de cette description et qui sont repris des documents WO2021111075 et WO2021111076 cités en introduction.

Intégration du dispositif d'émission-réception radiofréquence dans une enveloppe pneumatique.

Dans la description qui suit, la direction circonférentielle de l'enveloppe pneumatique (ou plus simplement « pneumatique »), ou direction longitudinale, est la direction correspondant à la périphérie du pneumatique et définie par la direction c de roulement de l'enveloppe pneumatique. La direction axiale x du pneumatique est parallèle à l'axe de rotation de l'enveloppe pneumatique, c'est-à-dire l'axe autour duquel il tourne en utilisation normale. La direction radiale est une direction coupant l'axe de rotation de l'enveloppe pneumatique et perpendiculaire à celui-ci. Un méridien est un plan qui contient l'axe de rotation du pneumatique. Un plan équatorial EP est un plan perpendiculaire à l'axe de rotation de l'enveloppe pneumatique et qui le divise en deux moitiés.

Dans toutes les illustrations qui vont suivre, l'orientation du dispositif d'émission-réception radiofréquence D est avantageusement circonférentielle, c'est-à-dire que l'antenne du dispositif est disposée au moins en partie selon la direction circonférentielle c du pneumatique. Cela assure un positionnement axial du dispositif d'émission-réception radiofréquence D par rapport à l'épaisseur de l'enveloppe pneumatique 100 permettant d'accorder de façon robuste la résonance de l'antenne rayonnante du dispositif d'émission-réception radiofréquence D lorsque celui-ci est intégré dans l'enveloppe pneumatique 100.

Par simplicité d'expression, on désigne dans cette section par dispositif d'émission-réception radiofréquence, le dispositif après qu'il est reçu le ou les traitement (s) de préparation exposé(s) dans la section précédente de cette description.

Comme cela est bien connu en soi, une enveloppe pneumatique présente une forme toroïdale et est composée d'un bloc sommet et deux blocs latéraux. Le bloc sommet présente deux extrémités axiales, un bloc latéral s'étendant respectivement d'une extrémité axiale du bloc sommet à un bourrelet par l'intermédiaire d'un flanc.

Selon l'invention, le dispositif d'émission-réception radiofréquence est intégré dans au moins un des blocs latéraux de l'enveloppe pneumatique. On présente ci-dessous en référence aux figures plusieurs exemples d'une telle intégration.

La figure 2a représente une coupe méridienne d'une enveloppe pneumatique 100 d'un premier type.

Cette enveloppe pneumatique de premier type comporte un bloc sommet 82, deux flancs 83 et deux bourrelets 84. Le bloc sommet 82 est renforcé par une armature de sommet ou ceinture 86. Le bloc sommet 82 est délimité axialement par deux extrémités axiales 821 assurant la connexion avec chaque flanc 83 de l'enveloppe pneumatique 100. L'armature de sommet 86 s'étend axialement jusqu'à une extrémité axiale 861 sur chacun de ses bords. L'armature de sommet 86 est surmontée radialement extérieurement d'une bande de roulement en matériau élastomère 89.

Dans chaque bloc latéral, un bourrelet 84 est renforcé avec une tringle 85. Une armature de carcasse 87 ancrée dans les bourrelets 84 sépare l'enveloppe pneumatique en deux zones que l'on nommera zone intérieure en direction de la cavité fluide et zone extérieure vers l'extérieur du pneumatique. L'armature de carcasse 87 comprend une partie principale qui est enroulée autour des deux tringles 85 dans chaque bourrelet 84 et d'un retournement 88, ici disposé vers l'extérieur de l'enveloppe pneumatique 100. L'armature de carcasse 87 est de manière connue en soi constituée d'au moins une couche renforcée par des câbles, par exemple ici textiles, c'est-à-dire que ces câbles sont disposés pratiquement parallèles les uns aux autres. La partie principale de l'armature de carcasse 87 s'étend d'un bourrelet 84 à l'autre de manière à former un angle compris entre 80° et 90° avec le plan équatorial EP. Une couche de gomme étanche interne 90 (en anglais « inner liner ») s'étend d'un bourrelet 84 à l'autre radialement intérieurement relativement à la partie principale de l'armature de carcasse 87. Il s'agit de la couche située le plus intérieurement à l'enveloppe pneumatique 100.

La figure 2b représente une vue de détail d'un des blocs latéraux de l'enveloppe pneumatique 100 du premier type de la figure 2a au niveau du bourrelet 84 et du flanc 83. Cette figure illustre des positionnements possibles du dispositif d'émission-réception radiofréquence D dans la zone extérieure de l'enveloppe pneumatique 100.

Le bourrelet 84 est constitué par la tringle 85 autour de laquelle s'enroule la partie principale de la couche de carcasse 87 avec une partie retournée 88 située dans la zone extérieure de l'enveloppe pneumatique 100. La partie retournée 88 de la couche carcasse se termine par un bord libre 881. Une couche de mélange caoutchouteux 91, nommée bourrage tringle, est située radialement extérieurement et de façon adjacente à la tringle 85. Elle présente un bord libre radialement extérieur 911 prenant appui sur une face de la partie principale de la couche de carcasse (plus précisément sur le calandrage extérieur de la couche de carcasse, il n'y a pas de contact direct entre les câblés de la couche de carcasse et l'organe électronique). Une couche de mélange caoutchouteux 92 nommée « bourrage de renfort » lui est adjacente. Elle possède deux bords libres. Le premier bord libre 921 est situé radialement intérieurement et prend appui sur la partie retournée 88 de la couche de carcasse. L'autre bord libre 922 est situé radialement extérieurement et se termine sur la face de la partie principale de la couche de carcasse 87. Enfin le flanc 83 est défini par l'intermédiaire d'une couche de mélange élastomère 94, nommée « couche de flanc » recouvrant à la fois le bourrage de renfort 92 et la partie principale de la couche de carcasse 87. Le flanc défini par la surface externe de la couche de flanc 94 possède un bord libre 941 situé radialement intérieurement et se terminant sur la partie retournée 88 de la couche de carcasse. Sur la zone intérieure de l'enveloppe pneumatique 100 se trouve la couche étanche interne 90 qui est adjacente à la partie principale de la couche de carcasse 87 dans cette configuration. Elle se termine par un bord libre 901 adjacent à la partie principale de la couche de carcasse 87. Enfin une couche de mélange élastomère 93, nommé « couche de bourrelet », vient protéger la couche de carcasse et les extrémités radialement intérieures 901, 921 et 941 respectivement de la couche étanche interne 90, du bourrage de renfort 92 et de la couche de flanc 94. La face extérieure de cette couche de bourrelet 93 est apte à être en contact direct avec le crochet de jante lors du montage de l'enveloppe pneumatique 100 sur la roue. Cette couche de bourrelet élastomère 93 présente trois extrémités libres formant un angle. La première extrémité libre 931 est située dans la zone intérieure de l'enveloppe pneumatique 100. La seconde extrémité libre 932 est située dans la zone extérieure de l'enveloppe pneumatique 100. Enfin, la troisième extrémité libre 933 constitue l'extrémité intérieure 841 du bourrelet 84.

Au moins un bloc latéral comprenant un bourrelet 84 et un flanc 83 qui lui est relié est équipé d'au moins un dispositif d'émission-réception radiofréquence D, situé dans la zone extérieure de l'enveloppe pneumatique 100. Un dispositif d'émission-réception radiofréquence D peut être positionné sur la face extérieure de la couche de bourrage tringle 91. Il est positionné à une distance de 10 millimètres du bord libre 881 de la partie retournée 88 de la couche de carcasse qui constitue une singularité mécanique. Ce positionnement assure une zone de stabilité mécanique pour le transpondeur radiofréquence 1 qui est bénéfique à son endurance mécanique. De plus, son enfouissement au sein même de la structure du bloc latéral de l'enveloppe pneumatique 100 lui assure une bonne protection aux agressions mécaniques en provenance de l'extérieur de l'enveloppe pneumatique 100.

Généralement, il est préférable de positionner le dispositif d'émission-réception radiofréquence D à une distance radiale comprise entre 20 à 40 millimètres de l'extrémité radialement extérieure de la tringle 85 afin d'être dans une zone stable mécaniquement de l'enveloppe pneumatique en service, ce qui assure une intégrité physique du dispositif d'émission-réception radiofréquence. De plus, ce positionnement garantit d'être radialement à l'extérieur du crochet de jante, ce qui permet une bonne performance de radiocommunication en limitant les perturbations liées à la nature souvent métallique de la roue.

Dans une alternative, le dispositif d'émission-réception radiofréquence D peut être positionné à l'intérieur de la couche de flanc 94. La similarité de matériau entre cette couche 94 et le mélange élastomère enrobant le dispositif d'émission-réception radiofréquence D ou la présence sur la surface extérieure du dispositif d'émission-réception radiofréquence D d'un promoteur d'adhésion assure une mise en place au sein du flanc 83 du dispositif D au cours du procédé de cuisson. Le dispositif d'émission-réception radiofréquence D est simplement déposé au sein du matériau par l'intermédiaire d'une fente sur la face extérieure à cru de la couche de flanc 94 au cours de la confection de l'enveloppe pneumatique 100. La mise sous pression de l'ébauche crue dans le moule de cuisson assure le positionnement du dispositif D à l'état cuit tel que représenté. Ce dispositif d'émission-réception radiofréquence D est alors situé loin de tout bord libre d'un autre constituant de l'enveloppe pneumatique 100 quasiment à l'équateur du flanc 83 assurant la plus grande distance de communication radiofréquence. En particulier il est éloigné du bord libre 932 de la couche de bourrelet 93, du bord libre 881 du retournement de la couche de carcasse 88 et des bords libres 911 et 922 des gommes de bourrage. Son positionnement assure une performance de communication accrue avec un lecteur radiofréquence externe d'autant plus avec la forme spécifique de l'antenne dipôle du dispositif d'émission-réception radiofréquence D. Les sollicitations cycliques lors du roulage ne seront pas gênantes en raison de la nature de l'antenne présentée dans une partie précédente de cette description et la miniaturisation de la partie électronique du dispositif d'émission-réception radiofréquence D. Nécessairement les deux positions illustrées des dispositifs d'émission-réception radiofréquence D sont situés axialement extérieurement à l'extrémité 933 de la couche de bourrelet 93 et donc de l'extrémité radialement intérieure du bourrelet 84. Ils sont positionnés radialement entre l'extrémité 851 radialement extérieure de la tringle 85 par rapport à l'axe de rotation de l'enveloppe pneumatique 100 et les extrémités axiales 861 de l'armature de sommet 86.

La figure 2c représente une autre vue de détail d'un bloc latéral d'une enveloppe pneumatique 100 du premier type. Cette figure 2c illustre le positionnement du dispositif d'émission-réception radiofréquence D dans la zone intérieure de l'enveloppe pneumatique 100 par rapport à la partie principale de l'armature de carcasse 87.

L'enveloppe pneumatique 100 comprend en particulier au niveau de la zone intérieure, une couche étanche interne 90 et une couche d'armature de renforts 97 intercalée entre la partie principale de la couche de carcasse 87 et la couche étanche interne 90. Ce composant 97 présente un bord libre 971 localisé radialement à l'intérieur de la tringle 85. Cette couche de renforts 97 s'étend d'un bourrelet 84 à l'autre bourrelet 84 de l'enveloppe pneumatique 100.

La localisation du dispositif d'émission-réception radiofréquence D au niveau de l'interface entre la couche étanche interne 90 et la couche de renforts 97 permet une stabilisation mécanique du dispositif d'émission-réception radiofréquence D. Celle-ci est radialement à l'extérieur d'environ 40 millimètres du bord libre 931 de la couche de bourrelet 93, ce qui permet de la positionner radialement à l'extérieur du crochet de jante lorsque l'enveloppe pneumatique montée sur une roue est en service. D'un point de vue endurance mécanique, cette localisation est idéale pour le transpondeur radiofréquence passif 1 qui est protégé de toute agression mécanique externe et de toute agression thermomécanique interne.

Une seconde localisation avantageuse du dispositif d'émission-réception radiofréquence D permet une meilleure performance radiocommunication en étant placé radialement plus à l'extérieur dans l'enveloppe pneumatique 100.

La figure 2d représente une autre vue de détail d'un bloc latéral d'une enveloppe pneumatique 100 du premier type. Le bourrelet 84 représenté à la figure 2d comprend une tringle de révolution 85, une partie principale d'une première couche de carcasse 87 s'étendant du flanc 83 vers la tringle 85 prolongée par un retournement 88 enroulé autour de la tringle 85 et s'étendant radialement extérieurement jusqu'à une extrémité 881. Ce retournement 88 est disposé axialement vers l'extérieur du bourrelet 84 de l'enveloppe pneumatique 100. La couche de mélange élastomère de bourrage tringle 91, appelée également gomme de bourrage, est disposée radialement extérieurement relativement à la tringle 85 et axialement entre la partie principale 87 et le retournement 88 de la première couche de carcasse. Cette gomme de bourrage 91 s'étend radialement extérieurement jusqu'à une extrémité 911. Il est à noter que l'extrémité 911 de la gomme de bourrage est située radialement extérieurement relativement à l'extrémité 881 du retournement 88.

Le bourrelet 84 comprend aussi une deuxième couche de carcasse ou couche de renfort 97 s'étendant sur la figure du flanc 83 jusqu'à la tringle 85. Cette deuxième couche de carcasse 97 est disposée axialement extérieurement relativement à la partie principale de la première couche de carcasse 87, à la gomme de bourrage 91 et au retournement 88 de la première couche de carcasse. Les deux couches de carcasse 87, 97 sont de manière connue en soi constituées de nappes renforcées par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan équatorial EP de l'enveloppe pneumatique. Une couche étanche interne 90, en mélange élastomère, située intérieurement à l'enveloppe pneumatique s'étend d'un bourrelet 84 à l'autre radialement intérieurement relativement à la partie principale de la première couche de carcasse 87. Le bourrelet 84 comporte une couche de bourrelet 93 en mélange élastomère apte à être en contact avec la surface d'une jante. Cette couche de bourrelet 93 s'étend radialement extérieurement jusqu'à une interface avec une couche de flanc 94 en mélange élastomère dont la surface externe définit le flanc 83. La couche de bourrelet 93 et la couche de flanc 94 constituent la couche extérieure de l'enveloppe pneumatique. Le bourrelet 84 comporte aussi une couche de bourrage additionnelle 92 disposée axialement entre la deuxième couche de carcasse 97 d'une part, la couche de bourrelet 93 et la couche de flanc 94 d'autre part.

Le bourrelet 84 comporte aussi un dispositif d'émission-réception radiofréquence D disposé axialement à l'interface entre la deuxième couche de carcasse 97 et la couche de bourrage additionnelle 92 et radialement entre l'extrémité 911 de la gomme de bourrage 91 et l'extrémité 881 du retournement 88 de la première couche de carcasse 87. Ici, le dispositif d'émission-réception radiofréquence D est positionné radialement extérieurement par rapport à l'extrémité radialement extérieure de la tringle 85 à une distance de 40 millimètres.

La figure 2d présente aussi le positionnement alternatif d'un dispositif d'émission-réception radiofréquence D à l'intérieur de la couche de flanc 94 situé à proximité de l'équateur de l'enveloppe pneumatique 100. Cette seconde position permet d'améliorer la performance de communication d'un transpondeur radiofréquence en service sur un véhicule puisque cette position éloigne le transpondeur radiofréquence passif des éléments électro conducteurs du véhicule (roue, passage de roue).

La figure 3 illustre en coupe axiale partielle d'un pneumatique 100 d'un deuxième type, apte à un roulage à plat, équipé d'un dispositif d'émission-réception radiofréquence D. Cette figure 3 indique aussi la hauteur de section SH de l'enveloppe pneumatique 100, c'est-à-dire la distance radiale entre le diamètre nominal de la jante de montage du pneumatique NRD et la partie radialement la plus extérieure de la bande de roulement 89 de l'enveloppe pneumatique 100. Dans le cadre de ce document, on prend comme diamètre nominal de la jante de montage du pneumatique, le diamètre de l'enveloppe pneumatique tel qu'indiqué par sa dimension.

L'enveloppe pneumatique 100 est représentée à l'état libre, c'est-à-dire non montée sur une jante de telle sorte que la largeur entre les deux bourrelets 84 est ramenée à la largeur de la jante nominale.

L'enveloppe pneumatique 100 apte au roulage à plat de la figure 3 comporte un bloc sommet 82, délimité par une extrémité axiale 821 à chacun de ses bords, renforcé par une armature de sommet ou ceinture 86 délimité par une extrémité axiale 861 à chacun de ses bords, un flanc 83 et un bourrelet 84, le bourrelet 84 étant renforcé avec une tringle 85. L'armature de sommet 86 est surmontée radialement extérieurement d'une bande de roulement en mélange élastomère 89. Une armature de carcasse 87 constituée d'une seule couche de carcasse est enroulée autour de la tringle 85 dans le bourrelet 84, le retournement 88 de cette couche de carcasse 87 étant disposé axialement vers l'extérieur de l'enveloppe pneumatique 100. La couche de carcasse 87 est de manière connue en soi constituée d'au moins une nappe renforcée par des câbles dits « radiaux », par exemple ici textiles, c'est-à-dire que ces câbles sont disposés pratiquement parallèles les uns aux autres et s'étendent d'un bourrelet à l'autre de manière à former un angle compris entre 80° et 90° avec le plan équatorial EP. Une couche de gomme étanche interne 90 s'étend d'un bourrelet à l'autre radialement intérieurement relativement à l'armature de carcasse 87. Le bourrelet 84 comporte une couche de bourrelet de mélange élastomère 93 apte à être en contact avec la surface d'une jante se terminant par l'extrémité 933 représentant l'extrémité radialement intérieure 841 du bourrelet 84. Il comporte aussi une couche de bourrage tringle 91 en mélange élastomère s'étendant radialement extérieurement relativement à la tringle 85.

Le pneumatique 100 est apte à rouler à plat en raison de la présence d'un insert de flanc 96 disposé axialement intérieurement relativement à la partie principale de l'armature de carcasse 87. Cet insert de flanc 96 permet à la structure du pneumatique de supporter la charge à pression nulle. L'ordre de grandeur du module d'extension d'une gomme caoutchouteuse d'un insert de flanc est de l'ordre de deux fois la valeur du module d'une gomme de flanc ou plus.

L'insert de flanc 96 de la figure 3 comporte un dispositif d'émission-réception radiofréquence D disposé à une distance radiale DI de l'extrémité radialement intérieure 933 du bourrelet 84. La distance DI doit être supérieure à 20 mm pour ne pas pénaliser la qualité de communication entre le transpondeur radiofréquence passif 1 et un lecteur externe.

Cette distance est supérieure à la hauteur d'un crochet de jante usuel qui est de 17,5 millimètres. Préférentiellement, la distance DI est inférieure à 50 millimètres.

On place de préférence le dispositif d'émission-réception radiofréquence D dans le semi-fini de l'insert de flanc 96 avant son incorporation dans l'ébauche de l'enveloppe pneumatique 100. L'insert de flanc 96, dans l'exemple de la figure 3, est constitué de deux masses de gommes 961 et 962 adjacentes axialement l'une par rapport à l'autre. Le dispositif d'émission-réception radiofréquence D est placé à l'interface entre les deux masses de gommes 961 et 962. Ce mode de réalisation facilite la mise en place précise et reproductible du dispositif d'émission-réception radiofréquence D lors de la confection de l'enveloppe pneumatique 100.

Dans une autre localisation possible du dispositif d'émission-réception radiofréquence D, celui-ci est placé à l'intérieur de la masse de gomme 962 par l'intermédiaire d'une fente située sur l'une des surfaces de la masse de gomme 962 permettant l'insertion du dispositif d'émission-réception radiofréquence D au sein de la masse de gomme 962. Ce second mode de réalisation facilite le positionnement du dispositif d'émission-réception radiofréquence D par rapport à la partie principale de la couche d'armature de carcasse 87, en étant en contact avec la masse de gomme, et homogénéise l'environnement diélectrique à proximité du dispositif d'émission-réception radiofréquence D, ce qui améliore sa performance radiofréquence. De plus, elle est située plus radialement extérieurement par rapport à l'axe de révolution de référence de l'enveloppe pneumatique 100.

La figure 3 illustre la zone Z de la hauteur de section SH de l'enveloppe pneumatique 100 dans laquelle il est préférable de positionner le dispositif d'émission-réception radiofréquence D.

Cette zone Z s'étend de 20 à 70% de SH. Le dispositif d'émission-réception radiofréquence D est placé à environ 25% de SH et le dispositif d'émission-réception radiofréquence D à 60% de cette grandeur.

La figure 4 présente un bloc latéral, comprenant un bourrelet 84 et un flanc 83, d'une enveloppe pneumatique 100 d'un autre type pour, principalement, des véhicules de tourisme.

L'enveloppe pneumatique comprend un bloc sommet se terminant par un bourrelet 84 à chacun de ses bords axiaux par l'intermédiaire d'un flanc 83.

L'armature de carcasse 87, constituée d'une seule couche de carcasse sur la figure 4, est ancrée dans le bourrelet 84 par retournement autour de la tringle 85 afin de créer une partie principale et un retournement 88 de l'armature de carcasse 87. Les fils de renfort de la couche de carcasse sont des fils textiles. La couche de bourrage tringle 91 sépare la partie principale de l'armature de carcasse 87 du retournement 88. Le retournement 88 de l'armature de carcasse s'étend radialement vers l'extérieur dans la zone du flanc 83 au-delà de l'extrémité radialement extérieure 911 de la couche de bourrage tringle 91.

La couche de bourrelet 93, couche en contact avec la jante lorsque l'enveloppe pneumatique est montée sur celle-ci, et la couche de flanc 94 assurant la surface extérieure du pneumatique dans la zone de flanc 83 sont directement en contact avec le retournement 88. Le bourrelet 84 comprend un dispositif d'émission-réception radiofréquence D noyé dans la couche de bourrelet 93 à une position radialement extérieure relativement à la tringle 85 dans une fourchette comprise entre 20 et 40 millimètres pour être radialement extérieur au crochet de la jante après montage du pneumatique pour assurer une bonne communication entre le transpondeur radiofréquence et un lecteur extérieur.

Cette figure 4 présente aussi deux positions alternatives dans lesquelles le dispositif d'émission-réception radiofréquence D est noyé dans la couche de flanc 94.

Comme indiqué précédemment, les deux positions présentées sur la figure 4 sont rendues possibles en raison de la bonne résistance mécanique du dispositif d'émission-réception radiofréquence D en raison de sa miniaturisation par rapport à des solutions de l'état de la technique. Ces positions sont à l'intérieur de l'enveloppe pneumatique, axialement extérieurement à l'extrémité 933 de la couche de bourrelet qui constitue l'extrémité intérieure 841 du bourrelet 84.

Il est aussi possible de positionner le dispositif d'émission-réception radiofréquence D à l'interface entre la couche de bourrelet 93 et le retournement 88 ou couche de flanc 94 et le retournement 88 ou la partie principale 87 de l'armature de carcasse. Il est alors important d'éloigner le dispositif d'émission-réception radiofréquence D des éléments de renforcement pour préserver son intégrité physique et/ou celle de l'enveloppe pneumatique. Et il est conseillé d'éloigner le dispositif d'émission-réception radiofréquence D des extrémités 931 des couches de mélanges élastomères 93 et 94 et de l'extrémité 881 du retournement 88 d'au moins 5 voire 10 millimètres pour préserver l'intégrité physique de l'enveloppe pneumatique.

Si les éléments de renforcement de la couche d'armature de carcasse, et potentiellement les éléments de renforcement des couches de renfort, sont de nature métallique, il convient de garantir un angle d'au moins 30 degrés, et préférentiellement d'au moins 45 degrés entre le premier axe longitudinal le dispositif d'émission-réception radiofréquence D et la direction de renforcement définie par ses éléments de renforcement. Ainsi, on minimise les perturbations de radiocommunication. Idéalement, dans une enveloppe pneumatique de type radial à une seule couche d'armature de carcasse métallique, l'angle entre le premier axe longitudinal dispositif d'émission-réception radiofréquence D et la direction de renforcement de la couche d'armature est de 90 degrés.

## Revendications

1. Enveloppe pneumatique (100) de forme toroïdale et présentant un axe de rotation, et comportant :
• Un bloc sommet (82) et deux blocs latéraux, le bloc sommet (82) présentant deux extrémités axiales (821), un bloc latéral réunissant respectivement une extrémité axiale à un bourrelet (84) par l'intermédiaire d'un flanc (83) ;
• Une armature de carcasse (87) ancrée dans chacun des bourrelets (84) par retournement autour d'une tringle (85) annulaire, l'armature de carcasse (87) séparant l'enveloppe pneumatique (100) en une zone intérieure disposée du côté de la cavité fluide de l'enveloppe pneumatique (100) et une zone extérieure disposée du côté de l'extérieur de l'enveloppe pneumatique (100) ;
• Une couche de bourrelet (93) formant la surface extérieure de l'enveloppe pneumatique (100) du bourrelet (84), ladite couche de mélange élastomère de bourrelet (93) étant destinée à venir en contact avec la jante,
• Une couche de flanc (94) située radialement extérieurement au contact de la couche de mélange élastomère de bourrelet (93) et formant la surface extérieure dudit flanc (83),
• Une couche étanche interne (90) située le plus intérieurement à l'enveloppe pneumatique (100)
au moins un des bloc latéraux de l'enveloppe pneumatique (100) comprenant un dispositif d'émission-réception radiofréquence (D) comportant :
- une puce (1) comprenant un circuit d'émission-réception (4) et au moins deux plots de connexion (4a, 4b) électriquement reliés au circuit d'émission-réception (4) ;
- une antenne dipôle constituée de deux fils d'antenne (7a, 7b) respectivement électriquement reliés aux deux plots de connexion (4a, 4b) de la puce (1), l'antenne dipôle (7a, 7b) comprenant un fil textile et au moins un ruban formé d'un matériau électriquement conducteur, le ruban étant enroulé en spires autour du fil textile pour le recouvrir au moins en partie.

2. Enveloppe pneumatique (100) selon la revendication précédente dans laquelle l'antenne dipôle est orientée dans le bloc latéral au moins en partie selon une direction circonférentielle.

3. Enveloppe pneumatique (100) selon l'une des revendications précédentes dans laquelle le dispositif d'émission-réception radiofréquence (D) est intégré dans la zone extérieure de l'enveloppe pneumatique (100).

4. Enveloppe pneumatique (100) selon la revendication précédente dans laquelle le dispositif d'émission-réception radiofréquence (D) est intégré dans la couche de flanc (94).

5. Enveloppe pneumatique (100) selon la revendication précédente dans laquelle le dispositif d'émission-réception radiofréquence (D) est situé au niveau de l'équateur du flanc de l'enveloppe pneumatique (100).

6. Enveloppe pneumatique (100) selon l'une des revendications 1 et 2 dans laquelle le dispositif d'émission-réception radiofréquence (D) est intégré dans la zone intérieure de l'enveloppe pneumatique (100).

7. Enveloppe pneumatique (100) selon la revendication précédente comprenant une couche de renforts (97) intercalée entre la couche de carcasse (87) et la couche étanche interne (90) et dans laquelle le dispositif d'émission-réception radiofréquence (D) est disposé à l'interface entre la couche étanche interne (90) et la couche de renforts (97).

8. Enveloppe pneumatique (100) selon la revendication 6 comprenant un insert de flanc (96) disposé axialement intérieurement relativement à l'armature de carcasse (87) et dans laquelle le dispositif d'émission-réception radiofréquence (D) est intégré dans l'insert de flanc (96).

9. Enveloppe pneumatique (100) selon l'une des revendications 1 et 2 dans laquelle le dispositif d'émission-réception radiofréquence (D) est intégré dans la couche de bourrelet (93) .

10. Enveloppe pneumatique (100) selon l'une des revendications précédentes dans lequel les deux fils d'antenne (7a, 7b) sont respectivement logés dans deux rainures longitudinales (2a, 2b) aménagées sur des faces opposées de la puce (1).

11. Enveloppe pneumatique (100) selon l'une des deux revendications précédentes dans lequel l'antenne dipôle comprend une boucle (b) d'adaptation d'impédance.

12. Enveloppe pneumatique (100) selon la revendication précédente dans lequel la boucle (b) présente une longueur comprise entre 10mm à 30mm.

13. Enveloppe pneumatique (100) selon l'une des revendications précédentes dans lequel le fil textile est composé à partir de fibres aramides ou d'un polyester aromatique.

14. Enveloppe pneumatique (100) selon l'une des revendications précédentes dans lequel le ruban est constitué d'un fil métallique laminé.

15. Enveloppe pneumatique (100) selon l'une des revendications précédentes dans lequel le ruban présente une épaisseur inférieure ou égale à 30 fois un diamètre du fil textile, avantageusement inférieure ou égale à 10 fois ce diamètre.

16. Enveloppe pneumatique (100) selon l'une des revendications précédentes dans lequel l'antenne dipôle présente une longueur comprise entre 40 et 80mm.

## Patentansprüche

1. Reifenmantel (100) mit Toroidform und der eine Drehachse vorweist, und der aufweist:
• einen Scheitelblock (82) und zwei laterale Blöcke, wobei der Scheitelblock (82) zwei axiale Enden (821) vorweist, wobei ein lateraler Block jeweils ein axiales Ende über eine Seitenwand (83) mit einem Wulst (84) verbindet;
• eine Karkassenbewehrung (87), die in jedem der Wulste (84) durch Stülpen um einen ringförmigen Wulstkern (85) herum verankert ist, wobei die Karkassenbewehrung (87) den Reifenmantel (100) in eine Innenzone, die auf der Seite des Fluidhohlraums des Reifenmantels (100) angeordnet ist, und eine Außenzone unterteilt, die auf der Seite des Äußeren des Reifenmantels (100) angeordnet ist;
• eine Wulstschicht (93), die die Außenoberfläche des Reifenmantels (100) des Wulsts (84) ausbildet, wobei die Elastomermischungswulstschicht (93) dazu bestimmt ist, mit der Felge in Berührung zu kommen,
• eine Seitenwandschicht (94), die radial äußerlich in Berührung mit der Elastomermischungswulstschicht (93) gelegen ist und die Außenoberfläche der Seitenwand (83) ausbildet,
• eine innere Abdichtungsschicht (90), die am weitesten innerlich zu dem Reifenmantel (100) gelegen ist
mindestens einer der lateralen Blöcke des Reifenmantels (100) umfassend eine Hochfrequenz-Sende-Empfangsvorrichtung (D), die aufweist:
- einen Chip (1), umfassend eine Sende-Empfangsschaltung (4) und mindestens zwei Anschlusskontakte (4a, 4b), die mit der Sende-Empfangsschaltung (4) elektrisch verbunden sind;
- eine Dipolantenne, die aus zwei Antennendrähten (7a, 7b) besteht, die jeweils mit zwei Anschlusskontakten (4a, 4b) des Chips (1) verbunden sind, die Dipolantenne (7a, 7b) umfassend ein Textilgarn und mindestens ein Band, das aus einem elektrisch leitfähigen Material ausgebildet ist, wobei das Band in Windungen um das Textilband herum gewickelt ist, um es mindestens teilweise zu bedecken.

2. Reifenmantel (100) nach dem vorstehenden Anspruch, wobei die Dipolantenne in dem lateralen Block mindestens teilweise entlang einer Umfangsrichtung ausgerichtet ist.

3. Reifenmantel (100) nach einem der vorstehenden Ansprüche, wobei die Hochfrequenz-Sende-Empfangsvorrichtung (D) in die Außenzone des Reifenmantels (100) integriert ist.

4. Reifenmantel (100) nach dem vorstehenden Anspruch, wobei die Hochfrequenz-Sende-Empfangsvorrichtung (D) in die Seitenwandschicht (94) integriert ist.

5. Reifenmantel (100) nach dem vorstehenden Anspruch, wobei die Hochfrequenz-Sende-Empfangsvorrichtung (D) an dem Äquator der Seitenwand des Reifenmantels (100) gelegen ist.

6. Reifenmantel (100) nach einem der Ansprüche 1 und 2, wobei die Hochfrequenz-Sende-Empfangsvorrichtung (D) in die Innenzone des Reifenmantels (100) integriert ist.

7. Reifenmantel (100) nach dem vorstehenden Anspruch, umfassend eine Verstärkungsschicht (97), die zwischen der Karkassenschicht (87) und der inneren Abdichtungsschicht (90) eingeschoben ist und wobei die Hochfrequenz-Sende-Empfangsvorrichtung (D) an der Schnittfläche zwischen der inneren Abdichtungsschicht (90) und der Verstärkungsschicht (97) angeordnet ist.

8. Reifenmantel (100) nach Anspruch 6, umfassend einen Seitenwandeinsatz (96), der axial innerlich relativ zu der Karkassenbewehrung (87) angeordnet ist und wobei die Hochfrequenz-Sende-Empfangsvorrichtung (D) in den Seitenwandeinsatz (96) integriert ist.

9. Reifenmantel (100) nach einem der Ansprüche 1 und 2, wobei die Hochfrequenz-Sende-Empfangsvorrichtung (D) in die Wulstschicht (93) integriert ist.

10. Reifenmantel (100) nach einem der vorstehenden Ansprüche, wobei die zwei Antennendrähte (7a, 7b) jeweils in zwei Längsnuten (2a, 2b) aufgenommen sind, die auf gegenüberliegenden Flächen des Chips (1) eingerichtet sind.

11. Reifenmantel (100) nach einem der zwei vorstehenden Ansprüche, wobei die Dipolantenne eine Impedanzanpassungsschleife (b) umfasst.

12. Reifenmantel (100) nach dem vorstehenden Anspruch, wobei die Schleife (b) eine Länge zwischen 10 mm bis 30 mm vorweist.

13. Reifenmantel (100) nach einem der vorstehenden Ansprüche, wobei das Textilgarn aus Aramidfasern oder aus einem aromatischen Polyester besteht.

14. Reifenmantel (100) nach einem der vorstehenden Ansprüche, wobei das Band aus einem gewalzten Metalldraht besteht.

15. Reifenmantel (100) nach einem der vorstehenden Ansprüche, wobei das Band eine Dicke vorweist, die kleiner als oder gleich dem 30-Fachen eines Durchmessers des Textilgarns, vorteilhafterweise kleiner als oder gleich dem 10-Fachen dieses Durchmessers ist.

16. Reifenmantel (100) nach einem der vorstehenden Ansprüche, wobei die Dipolantenne eine Länge zwischen 40 und 80 mm vorweist.

## Claims

1. Tire casing (100) having a toroidal shape and an axis of rotation, and comprising:
• a top block (82) and two side blocks, the top block (82) having two axial ends (821), a side block joining an axial end to a bead (84) via a sidewall (83);
• a carcass frame (87) anchored in each of the beads (84) by turning over around an annular bead wire (85), the carcass frame (87) separating the tire casing (100) into an interior zone arranged on the side of the fluid cavity of the tire casing (100) and an exterior zone arranged on the side of the exterior of the tire casing (100);
• a bead layer (93) forming the exterior surface of the tire casing (100) of the bead (84), said bead elastomer compound layer (93) being intended to come into contact with the rim,
• a sidewall layer (94) located radially on the outside in contact with the bead elastomer compound layer (93) and forming the exterior surface of said sidewall (83),
• an inner sealed layer (90) located innermost to the tire casing (100)
at least one of the side blocks of the tire casing (100) comprising a radiofrequency transceiver device (D) comprising:
- a chip (1) comprising a transceiver circuit (4) and at least two connection pads (4a, 4b) electrically connected to the transceiver circuit (4);
- a dipole antenna consisting of two antenna wires (7a, 7b) each electrically connected to the two connection pads (4a, 4b) of the chip (1), the dipole antenna (7a, 7b) comprising a textile yarn and at least one ribbon formed of an electrically conductive material, the ribbon being wound in turns around the textile yarn to cover it at least partially.

2. Tire casing (100) according to the preceding claim, wherein the dipole antenna is oriented in the side block at least partially in a circumferential direction.

3. Tire casing (100) according to either of the preceding claims, wherein the radiofrequency transceiver device (D) is integrated into the exterior zone of the tire casing (100).

4. Tire casing (100) according to the preceding claim, wherein the radiofrequency transceiver device (D) is integrated into the sidewall layer (94).

5. Tire casing (100) according to the preceding claim, wherein the radiofrequency transceiver device (D) is located at the equator of the sidewall of the tire casing (100).

6. Tire casing (100) according to one of claims 1 and 2, wherein the radiofrequency transceiver device (D) is integrated into the interior zone of the tire casing (100).

7. Tire casing (100) according to the preceding claim, comprising a reinforcement layer (97) inserted between the carcass layer (87) and the inner sealing layer (90) and wherein the radiofrequency transceiver device (D) is arranged at the interface between the inner sealing layer (90) and the reinforcement layer (97).

8. Tire casing (100) according to claim 6, comprising a sidewall insert (96) arranged axially inwardly relative to the carcass reinforcement (87) and wherein the radiofrequency transceiver device (D) is integrated into the sidewall insert (96).

9. Tire casing (100) according to one of claims 1 and 2, wherein the radiofrequency transceiver device (D) is integrated into the bead layer (93).

10. Tire casing (100) according to any of the preceding claims, wherein the two antenna wires (7a, 7b) are each housed in two longitudinal grooves (2a, 2b) arranged on opposite surfaces of the chip (1).

11. Tire casing (100) according to one of the two preceding claims, wherein the dipole antenna comprises an impedance matching loop (b).

12. Tire casing (100) according to the preceding claim, wherein the loop (b) has a length of between 10 mm to 30 mm.

13. Tire casing (100) according to any of the preceding claims, wherein the textile yarn is composed of aramid fibers or an aromatic polyester.

14. Tire casing (100) according to any of the preceding claims, wherein the ribbon is made of a laminated metal wire.

15. Tire casing (100) according to any of the preceding claims, wherein the ribbon has a thickness less than or equal to 30 times a diameter of the textile yarn, advantageously less than or equal to 10 times that diameter.

16. Tire casing (100) according to any of the preceding claims, wherein the dipole antenna has a length of between 40 and 80 mm.
